# FASCICULE DE BREVET EUROPEEN

(11) **EP 1 791 793 B1**
(45) Date de publication et mention de la délivrance du brevet: **03.11.2010**
(21) Numéro de dépôt: 05799905.4
(22) Date de dépôt: 16.09.2005
(51) Int. Cl.: C02F 3/32, C02F 3/30

(54) **METHODE DE TRAITEMENT DE POLLUANTS PAR PHYTOLIXIVIATION**
VERFAHREN ZUR BEHANDLUNG VON SCHADSTOFFEN DURCH PFLANZENAUSLAUGUNG
METHOD FOR TREATING POLLUTANTS BY PHYTOLEACHING

(30) Priorité: 16.09.2004 FR 0409909; 16.09.2004 FR 0409907; 16.09.2004 FR 0409908
(43) Date de publication de la demande: 06.06.2007
(73) Titulaire: Phytorestore, 75002 Paris (FR)
(72) Inventeur: JACQUET, Thierry, F-75002 Paris (FR)
(74) Mandataire: Novagraaf Technologies
(86) Numéro de dépôt international: PCT/FR2005/050756
(87) Numéro de publication internationale: WO 2006/030164

(56) Documents cités:
- WO-A-03/042115
- DE-A1- 3 423 226
- FR-A- 2 690 683
- PATENT ABSTRACTS OF JAPAN vol. 1997, no. 06, 30 juin 1997 (1997-06-30) & JP 09 047779 A (FUJITA CORP), 18 février 1997 (1997-02-18)

## Description

La présente invention concerne un procédé de traitement d'eau, de sols ou d'air pollués, et plus particulièrement un procédé de traitement par une solution végétale (phytoremédiation).

L'idée d'utiliser les plantes pour la réhabilitation environnementale est certainement très ancienne : il y a 300 ans, on utilisait ainsi déjà les plantes dans le traitement de l'eau.

La phytoremédiation a récemment été définie comme l'utilisation de végétaux supérieurs pour extraire, stabiliser ou dégrader des substances polluant l'environnement. Cette technique présente des nombreux avantages : elle permet de dégrader nombres de polluants organiques, elle génère des résidus riches en métaux qui peuvent être recyclés ; elle est applicable à un grand nombre de métaux toxiques ; elle ne provoque qu'un minimum de perturbations dans l'environnement ; elle présente un faible coût estimé entre 60 000 et 100 000 $ par hectare dans le cas de traitement de sols pollués, ce qui représente environ la moitié de la somme investie pour la procédure traditionnelle la moins chère.

Le point central de la phytoremédiation se situe d'abord à l'interface sol/racine, avec le cortège de micro-organismes associés qui apparaît comme le premier lieu d'interactions entre les polluants et la plante. Le volume de sol soumis à l'influence de l'activité racinaire se définit sous le terme de *rhizosphère*, lequel varie en fonction de la mobilité des éléments analysés. Ainsi, la rhizosphère pourra se limiter aux premiers millimètres de sol situés autour des racines pour les éléments les moins mobiles.

L'influence de ces microorganismes sur la plante comporte, entre autres, les actions suivantes : (i) apport d'azote résultant de la fixation d'azote par des bactéries rhizosphériques (comme *Rhizobium, Frankia, Azospirillum* , etc.) ; (ii) synthèse de phytohormones (auxines, gibbérellines, cytokinines, etc.) ; (iii) solubilisation des nutriments par l'intermédiaire d'agents chélatants ; (iv) antagonisme vis-à-vis des agents pathogènes. Les microorganismes présents dans cette zone vont ainsi jouer deux rôles essentiels en agissant d'une part sur la transformation chimique et même physique du sol et, d'autre part, sur la nutrition de la plante, directement ou indirectement.

Dans le cadre de la dépollution, les transformations chimiques opérées par ces microorganismes vont jouer un rôle prépondérant. On peut citer à titre d'exemple la minéralisation de la matière organique, l'immobilisation des composés inorganiques par la microflore, l'oxydation ou la réduction des polluants *(Pseudomonas fluorescens,* etc.), ou encore leur assimilation et leur dégradation.

L'une des utilisations prépondérantes de la phytoremédiation consiste ainsi en la phytodégradation qui utilise les plantes et la microflore associée pour transformer les substances toxiques au niveau de la rhizosphère en substances moins toxiques. L'action des micro-organismes rhizoshériques joue alors un rôle central.

Dans l'art antérieur, différents procédés de dépollution ont ainsi été envisagés afin d'améliorer la dégradation des polluants par ces microorganismes.

Ainsi, le brevet US 4,415,450 décrit un dispositif dans lequel des eaux usées est effectué à travers un filtre composé de matériaux granulaires en trois couches avec un passage initial dans les couches inférieures en milieu anaérobie permettant l'hydrolyse des composés organiques jusqu'à la couche supérieure plantée de plantes aquatiques comme *Phragmite communis* où des réactions d'oxydation se déroulent en milieu aérobie. De tels procédés permettent de potentialiser l'activité de ces microorganismes pour la dégradation de certains polluants. Dans le domaine des eaux usées, l'utilisation de lits filtrant plantés de roseaux (reeds bed) est désormais bien connu.

La demande de brevet JP 09047779 décrit un dispositif dans lequel d'épuration par phytoremédiation destiné au traitement d'eaux usées par une succession de phases anaérobie et aérobie. Le lit filtrant planté est contenu dans un bac. L'apport en eau usée s'effectue de façon régulière et le lit filtrant est saturé en eau. L'écoulement de l'eau à l'extérieure du bac s'effectue lorsque le niveau d'eau dépasse un seuil (coude 14). La filtration s'effectue par une succession de montés du niveau d'eau usée au-delà du seuil et de descentes du niveau en deçà du seuil.

Pour autant, certains polluants, comme les métaux ou certains polluants inorganiques très faiblement biodégradables ne peuvent pas être dégradés ou éliminés par de tels procédés, et de nouvelles approches ont dû être développées pour la dépollution de ces polluants particuliers.

La phytostabilisation utilise un couvert végétal adapté pour diminuer la mobilité des métaux présents dans le sol. Les plantes utilisées sont des espèces tolérantes présentant une stratégie d'exclusion. Ainsi, les métaux sont piégés au niveau de la racine, diminuant les risques de lixiviation vers les eaux souterraines ou encore l'entraînement par érosion éolienne ou hydrique. Cette technique est souvent associée à l'ajout de composants susceptibles d'immobiliser dans les sols les métaux comme Zn, Cu, Pb, Cd, Ni et As. À titre d'exemple de tels composés, on peut citer les scories, les phosphatées, la béringite et la grenaille d'acier.

La phytoextraction utilise à la base des espèces hyperaccumulatrices, qui extraient de grandes quantités de métaux du sol et les concentrent dans les parties aériennes. Certaines espèces végétales sont en effet capables d'accumuler de grandes quantités de métal (jusqu'à plusieurs % massiques), alors que d'autres sont seulement tolérantes et ne peuvent s'accumuler que des quantités restreintes d'éléments métalliques. Les parties aériennes concentrant de grandes quantités de métaux du sol peuvent ensuite être récoltées et soumises à des traitements thermiques, chimiques ou microbiologiques. Pour autant, le principal inconvénient des plantes hyperaccumulatrices est leur faible biomasse et leur spécialisation pour ne traiter qu'un ou deux types de métaux lourds. C'est pourquoi, la stratégie actuelle de phytoextraction consiste à utiliser les espèces tolérantes à forte biomasse (comme la moutarde indienne, le maïs, le tournesol, etc.), couplées à l'ajout de chélatants, comme l'EDTA, dans le sol pour améliorer l'accumulation des métaux par les plantes. La majorité des travaux appliquant cette stratégie ont concerné l'extraction du plomb. Une autre voie de recherche pour accroître la phytoextraction consisterait à transférer les gènes responsables de l'hyperaccumulation chez les plantes tolérantes à forte biomasse.

Enfin, la phytovolatilisation utilise les plantes afin de transformer les éléments métalliques (comme Se et Hg) sous une forme gazeuse (comme le diméthylsélénide) qui permet de les volatiliser dans l'atmosphère.

Pour autant, les plantes n'extraient qu'une quantité limitée de métal, au mieux quelques centaines de kg par hectare et par an. Ce facteur limite la quantité de polluants pouvant être extraite en un temps « raisonnable ». Les sols ou les lits filtrant plantés contenant plusieurs pourcent de métaux demanderaient alors de très nombreuses années pour obtenir une dépollution complète. En effet, nombre de ces métaux ont tendance à se concentrer dans les sols ou dans les différentes couches des filtres, le plus souvent sous la forme de précipités, ce qui rend leur extraction difficile. Les procédés de l'art antérieur nécessitent donc des temps très importants pouvant aller jusqu'à près de 15 ans afin d'aboutir à une dépollution convenable. En outre, nombre de ces procédés nécessitent l'utilisation de plantes spécifiques adaptées à un polluant particulier, ce qui les rend inadaptés pour traiter des polluants multiples.

Il existe donc encore aujourd'hui un besoin concernant le développement de nouveaux procédés de phytoremédiation qui permettent d'obtenir une bonne dépollution pour une large gamme de polluants, et qui assurent tout à la fois une gestion simplifiée desdits polluants et ceci en association avec des coûts de fonctionnement acceptables avec des temps de traitement court.

Dans le cas des métaux, leur fraction ionique est fonction des changements de potentiel redox du milieu. Ainsi, il est possible d'augmenter la fraction ionique des métaux et donc leur fraction ionique dans des conditions réductrices.

Partant de ce constat, la Demanderesse a mis en évidence qu'il était possible de modifier le potentiel redox d'un lit filtrant planté et d'améliorer la dépollution dans le cadre d'un procédé de phytoremédiation en effectuant un arrosage du lit filtrant planté de manière à organiser des périodes aérobies et anaérobies. Par rapport à l'art antérieur, il s'agit donc de favoriser la lixiviation des éléments non dégradables présents dans le sol et leur piégeage consécutif dans un filtre en aval du lit filtrant planté. Cette invention porte donc sur une nouvelle méthode de phytoremédiation utilisée pour la première fois dans un traitement court des polluants. D'où le terme de phytolixiviation qui n'a d'ailleurs jamais été auparavant utilisé dans les travaux scientifiques de phytoremédiation pour ce type de traitement.

Le procédé selon l'invention permet ainsi d'améliorer la dégradation des polluants par les microorganismes du fait de cette alternance de période aérobie/anaérobie et de dépolluer sur une courte période (entre 1 et 2 ans) pour les sols, une très courte période pour l'eau (de quelques heures à quelques jours) et un traitement quasi instantané pour l'air. Le procédé selon l'invention permet surtout, du fait de la modification contrôlée du potentiel redox du milieu, d'améliorer la dissolution des espèces non dégradables et notamment métalliques présentes dans le sol, et ainsi de favoriser leur biodisponibilité pour les espèces végétales au niveau de ce premier compartiment, mais surtout leur lixiviation vers un second compartiment jouant le rôle de filtre et leur piégeage consécutif dans ce dernier.

La méthode selon l'invention permet donc d'apporter une solution bien plus complète en termes de dépollution par rapport aux procédés de l'art antérieur. Le principe de traitement est la phytolixiviation assistée des éléments à éliminer par le biais de casiers végétalisés, polluants qui sont par la suite piégés dans un filtre, de préférence un filtre naturel permettant leur séquestration sous des formes non-biodisponibles.

En conséquence, la présente invention a pour objet un procédé de dépollution par phytoremédiation destiné au traitement d'eaux usées, d'air ou de sols pollués comprenant une première étape d'introduction de polluants sous forme solide, liquide ou gazeuse dans un lit filtrant planté, et **caractérisé en ce qu'**il comprend en outre une étape d'arrosage dudit lit filtrant planté de sorte d'organiser des périodes aérobies ou anaérobies.

Selon un mode de réalisation particulier du procédé selon l'invention, celui-ci peut comprendre, préalablement à l'introduction des polluants dans le lit filtrant planté, une étape de prétraitement desdits polluants qui peut consister en un passage dans un dégrilleur, qui peut être suivi d'un transfert dans une fosse toutes eaux ou un décanteur-digesteur.

L'alternance de périodes aérobies et anaérobies permet d'améliorer d'une part la dégradation des polluants dans le lit filtrant planté par les plantes et les microorganismes dudit lit filtrant planté, mais simultanément la dissolution des espèces non dégradables présentes dans le sol, notamment les espèces métalliques, de sorte de permettre leur lixiviation, et ainsi le lessivage du lit filtrant planté durant chaque cycle. Ainsi, le procédé selon l'invention permet de dépolluer notamment par phytoremédiation des boues urbaines, des sols pollués, divers effluents industriels ou agricoles et des produits de curage en vue d'obtenir un matériau cultivable de qualité, c'est-à-dire avec des teneurs en éléments traces (métaux lourds) ou tout autre type de polluants (hydrocarbures, pesticides, radioactivité, etc.) proche des teneurs naturelles des sols et avec des formes physicochimiques non biodisponibles.

L'arrosage permet une saturation du lit filtrant planté en eau lors de la période anaérobie et, lors du traitement de sols ou d'eaux polluées, peut prendre la forme d'une inondation contrôlée.

L'organisation des périodes cycliques d'arrosage correspond à une succession irrigation/assèchement du lit filtrant planté, la périodicité des cycles étant fonction de la forme de la pollution à traiter. Typiquement, le procédé selon l'invention utilisera des cycles d'irrigation/assèchement de 4 heures à plusieurs mois dans le cas de traitement de sols ou de boues pollués, de préférence de 12 heures à 2 mois et de manière particulièrement préférée de l'ordre d'un mois. Dans le cas du traitement d'eaux usées, le procédé selon l'invention utilisera des cycles de 4 heures à deux mois, de préférence de 1 à 15 jours et de manière particulièrement préférée de l'ordre de 1 à 7 jours. Enfin, et dans le cas du traitement d'air pollué, le procédé selon l'invention utilisera des cycles de 2 minutes à 24 heures, de préférence de 5 à 200 minutes et de manière particulièrement préférée de l'ordre de 10 minutes.

Cette variation importante des cycles tient au fait que dans le cas d'une pollution des sols, la dissolution des espèces non dégradables nécessite un temps de lavage important tandis que dans le cas d'une pollution des eaux, les espèces non dégradables se trouvent d'ors et déjà sous une forme plus facilement soluble simplifiant leur lixiviation dans le lit filtrant planté. Enfin, et dans le cas de traitement d'air pollué et par rapport aux eaux usées, l'introduction d'air pollué accélère fortement la vitesse d'assèchement du lit filtrant planté ce qui implique de facto une réduction importante du temps des cycles d'irrigation/assèchement de sorte d'avoir un lit filtrant planté viable et fonctionnel.

Dans ces différents cycles, la répartition des périodes irrigation/assèchement se correspond à un rapport de 2/1 à 1/50, de préférence de 1/1 à 1/20, par exemple de 1/1 à 1/10, et de manière particulièrement préférée de 1/1 à 1/5.

Le procédé permet alors, par la succession de phases aérobies et anaérobies, d'améliorer la dégradation de polluants dans le lit filtrant planté, mais également d'augmenter la variation du potentiel redox au cours d'un cycle dans le lit filtrant planté et ainsi d'augmenter la dissolution des espèces non dégradables dans le lit filtrant planté et leur lixiviation.

Les lits filtrants plantés, notamment les lits filtrant plantés de roseaux pour les eaux usées sont bien connus de l'homme du métier et se composent de différentes couches de matériaux. De tels lits filtrants plantés sont également parfois appelés « massifs filtrant ». Pour les lits filtrants plantés les plus simples, leur structure se décompose en une couche drainante à la base et une couche servant de support à la végétation et au développement de la rizosphère. Dans le procédé selon l'invention, la couche drainante, laquelle peut contenir des drains, permet l'évacuation des lixiviats vers un filtre de piégeage lors des périodes de saturation du lit filtrant planté en eau.

La végétation des lits filtrant plantés correspond à des végétaux de milieux humides du type formation humide (type Alnio-padion) protégés par la convention de RAMSAR, tels que les phragmites (*Phragmite communis*), les scirpes (*Scirpus communis*), les carex (*Carex acutiformis*), les iris (*Iris speudaocorus*), les saules (*Salix viminalis*), les aulnes (*Aulnus glutinosa*) ou les cerisiers sauvages (*Prunus padus*).

Avantageusement, le lit filtrant planté opère une filtration de type verticale de la couche drainante vers la couche support ou l'inverse. Dans le cas d'une filtration de type horizontale, la dépollution s'opère par le passage simultané des polluants dans les différentes couches. Pour autant, un tel lit filtrant planté avec filtration de type verticale peut être positionné horizontalement pour la dépollution des eaux usées, des sols ou de l'air pollué, mais aussi verticalement pour la dépollution de l'air pollué.

Dans le cas de la dépollution des sols, les sols pollués correspondent à la couche servant de support à la végétation et la filtration des polluants s'opère de la couche support vers la couche drainante.

Dans le cas de la dépollution de l'air, à l'inverse, la filtration des polluants s'opère de la couche drainante vers la couche support avec une introduction de l'air pollué au niveau de ladite couche drainante.

Enfin, dans le cas de la dépollution d'eaux usées, celle-ci peut s'opérer indistinctement de la couche drainante vers la couche support ou l'inverse, avec une introduction des eaux polluées au niveau de la couche drainante ou au niveau de la couche support respectivement.

Avantageusement, la couche drainante du lit filtrant planté est reliée à un système d'aération. Ce système d'aération relié à la base du lit filtrant planté permet d'améliorer l'efficacité des périodes d'assèchement, et par la même les réactions aérobies dans la totalité du lit filtrant planté.

Dans le cas où la couche drainante comprend des drains simplifiant l'évacuation des lixiviats vers un filtre, ces derniers peuvent aussi jouer le rôle de système d'aération. Il est également possible de connecter des évents localisés à la surface du lit filtrant planté à la couche drainante, et selon un mode de réalisation particulier aux drains pouvant être localisés dans cette dernière.

Avantageusement, le lit filtrant planté utilisé dans le procédé selon l'invention comprend une couche, autre que la couche drainante, comprenant des matériaux soit organiques, tels que les tourbes noires ou les composts, soit alluvionnaires. De préférence, ladite couche présente les caractéristiques physiques de matériaux alluvionnaires avec une forte porosité comprise dans l'intervalle 20 à 60% avec une conductivité hydraulique dans l'intervalle de 100 à 1000 (m/d) et est également riche en matériaux organiques, notamment de la tourbe noire.

Une couche présentant les caractéristiques désirées peut être simplement obtenu par l'homme du métier, notamment par le mélange de matériaux alluvionnaires et de matériaux organiques. Il est également possible, notamment par des opérations de broyage et/ou de séchage, d'obtenir une couche présentant les propriétés désirées à partir de matériaux organiques tels que la tourbe ou les composts.

Cette couche peut en fonction de la dépollution envisagée servir de couche de support à la végétation ou correspondre à une couche intermédiaire localisée entre la couche drainante et la couche de support pour la végétation, notamment dans le cas de dépollution de sols pollués.

Cette couche permet, du fait de sa richesse en matières organiques d'immobiliser les éléments polluants non-dégradables, et surtout les espèces métalliques, et d'alimenter les réactions anaérobies lors des périodes d'arrosage, et également du fait de ses caractéristiques de matériaux alluvionnaires d'obtenir une saturation rapide en eau lors des phases d'arrosage. La rapidité de cette saturation en eau permet une variation importante du potentiel redox dans cette couche dans un court intervalle de temps, ce qui facilite d'autant la transition des espèces métalliques ou polluants inorganiques stables piégés dans cette dernière vers une forme cationique ou anionique soluble. Cette transition facilite alors le lessivage de cette couche et l'évacuation consécutive de ces lixiviats vers un filtre de piégeage.

La quantité de matériaux organiques dans ladite couche peut être déterminée simplement de sorte à ce que les réactions en anaérobiose bénéficient d'un substrat suffisant.

Le procédé selon l'invention, comprend en outre une étape d'addition de produits acidifiants ou d'acides naturels, de préférence totalement biodégradables, au lit filtrant planté au cours des périodes d'arrosage. De préférence ces produits acidifiants sont ajoutés directement à l'eau d'arrosage. L'ajout de ces produits acidifiants permet en modifiant le pH, d'augmenter la différence de potentiel redox dans le lit filtrant planté entre la période sèche et irriguée, et ainsi d'augmenter la dissolution des éléments non-dégradables et notamment des espèces métalliques présents, et leur lixiviation lors de l'étape de lessivage du lit filtrant planté.

Une telle addition peut être effectuée simplement à l'aide d'une pompe doseuse, lesquelles sont bien connues de l'homme du métier.

La quantité de produits acidifiants ajoutée au massif filtrant est telle que la valeur de pH du massif filtrant, comprise avant leur addition dans un intervalle de 7 à 9 et de préférence de 7 à 8, soit abaissée dans l'intervalle de 4 à 7, de préférence de 5 à 7.

Avantageusement, les produits acidifiants utilisés et totalement biodégradables sont choisis parmi les acides naturels, de préférence parmi les acides organiques, tels que l'acide citrique, oxalique ou malique, de préférence le produit acidifiant est l'acide citrique.

Dans le cas de ces acides organiques et notamment de l'acide citrique, ceux-ci, en plus d'ajuster le pH dans le lit filtrant planté, permettent d'améliorer encore l'élimination des éléments polluants non dégradables et notamment des espèces métalliques présents dans le lit filtrant planté en formant des sels avec ces derniers. L'efficacité de l'étape de lixiviation s'en trouve alors améliorée.

Avantageusement, le procédé selon l'invention comprend en outre une étape d'évacuation des lixiviats de la couche drainante du lit filtrant planté vers un filtre de piégeage, lequel présente avantageusement des dimensions moindres.

Cette évacuation s'opère simplement à l'aide d'une canalisation reliant la couche drainante à la base du lit filtrant planté au filtre de piégeage. De préférence, cette canalisation pourra prendre la forme d'un drain, au moins dans la portion de celle-ci présente à la base du lit filtrant planté.

Avantageusement, l'évacuation des lixiviats vers le filtre de piégeage est contrôlée par une vanne positionnée sur la canalisation reliant le lit filtrant planté et ledit filtre de piégeage. L'ouverture et la fermeture de cette vanne permet d'améliorer par sa fermeture la rapidité de la transition des phases aérobies vers les phases anaérobies dans le lit filtrant planté, et par son ouverture la rapidité de la transition des phases anaérobies vers les phases aérobies.

Le filtre de piégeage permet la concentration des polluants évacués du lit filtrant planté lors de chaque cycle d'assèchement/irrigation et ainsi d'accélérer considérablement la vitesse de dépollution. Il est ainsi possible de renouveler simplement ledit filtre de piégeage sans intervenir sur le lit filtrant planté.

Le filtre de piégeage peut prendre la forme d'une enceinte comprenant des composants susceptibles d'immobiliser des polluants non-dégradables et notamment des métaux. À titre d'exemple de tels composants, on peut citer les scories phosphatées, la béringite et la grenaille d'acier.

Le filtre de piégeage peut également prendre la forme d'un lit filtrant planté, lequel comprend alors une couche drainante et une couche servant de support à la végétation composée essentiellement de matériaux organiques tels que décrit précédemment, de préférence de tourbe, de sorte de pouvoir fixer les polluants non-dégradables, et surtout les espèces métalliques présentes dans les lixiviats provenant du premier lit filtrant planté. Il est également possible de mettre en oeuvre un lit filtrant planté ne présentant pas de couche drainante en tant que filtre de piégeage.

Selon un mode de réalisation particulier du procédé selon l'invention, notamment dans le cas de traitement d'eaux usées, le procédé comprend en outre l'évacuation des eaux traitées.

Ladite évacuation s'opère alors simplement à l'aide d'une canalisation reliant le filtre de piégeage, et plus précisément la couche drainante de celui-ci dans le cas d'un filtre de piégeage prenant la forme d'un lit filtrant planté, vers le site d'évacuation désiré.

Avantageusement, ladite évacuation est contrôlée par une vanne permettant la libération de l'eau présente dans le filtre de piégeage après le piégeage des polluants non-dégradables, et notamment des espèces métalliques dans ce dernier.

Une telle évacuation peut se faire notamment vers le milieu naturel, vers un lit filtrant planté tel que décrit précédemment avec la répétition des étapes telles que décrites précédemment, ou encore vers une aire d'infiltration et d'évaporation permettant de minimiser ou d'atteindre le zéro rejet dans le milieu naturel, laquelle aire peut notamment être plantée de saules, d'aulnes, de peupliers et/ou de bouleaux ou de divers végétaux aquatiques.

Le procéclé seon l'invention peut être mis en oeuvre dans un dispositif pour le traitement de sols ou de boues pollués comprenant :
- un casier végétalisé comprenant un lit filtrant planté comprenant à la base du casier une couche drainante et une seconde couche servant de support à la végétation ;
- une alimentation des casiers végétalisés, soit pour acheminer l'eau, soit pour acheminer des eaux usées ou des boues liquides, laquelle alimentation est avantageusement couplée à une vanne de sorte d'organiser des périodes aérobies ou anaérobies dans ledit lit filtrant planté; et
- un filtre de piégeage connecté à la couche drainante du lit filtrant planté.
- un système d'alimentation des casiers végétalisés en produits acidifiants ou en acides naturels couplé à une pompe doseuse.

Les différents éléments du dispositif sont isolés du sol à l'aide de moyens d'étanchéité, lesquels sont bien connus de l'homme du métier et comprennent notamment les films en matière plastique.

La végétation dudit lit filtrant planté correspond à des végétaux de milieux humides du type formation humide (type Alnio-padion) protégés par la convention de RAMSAR, tels que les phragmites (*Phragmite communis),* les scirpes (*Scirpus communis*), les carex (*Carex acutiformis*), les iris (*Iris speudaocorus*), les saules (*Salix viminalis*), les aulnes (*Aulnus glutinosa*) ou les cerisiers sauvages (*Prunus padus*).

La structure des couches drainantes est bien connue de l'homme du métier. À titre d'exemple, une telle couche est généralement constituée de galets ou de blocs de matériaux lavés.

L'épaisseur de cette couche drainante est avantageusement de 10 à 100 cm, de préférence de 15 à 50 cm et de manière particulièrement préférée de 20 à 30 centimètres.

Avantageusement, la couche drainante comprend des drains de récupération.

La couche drainante est reliée par une canalisation au filtre de piégeage, de préférence ladite canalisation joue le rôle de drains de récupération au niveau de la couche drainante du lit filtrant planté.

Avantageusement encore, ladite canalisation est munie d'une vanne, lesquelles sont bien connues de l'homme du métier, qui permet de contrôler plus efficacement l'évacuation des lixiviats vers le filtre de piégeage et d'améliorer la mise en place des périodes aérobies ou anaérobies dans le lit filtrant.

Selon un mode de réalisation préféré du dispostif, le lit filtrant planté comprend une couche, autre que la couche drainante, comprenant des matériaux soit organiques, tels que les tourbes noires ou les composts, soit alluvionnaires. Ladite couche peut correspondre à la couche de support pour la végétation, soit à une couche intermédiaire entre la couche drainante et la couche support pour la végétation.

Avantageusement, ladite couche présente les caractéristiques physiques de matériaux alluvionnaires avec une forte porosité comprise dans l'intervalle 20 à 60% avec une conductivité hydraulique dans l'intervalle de 100 à 1000 (m/d) et est également riche en matériaux organiques, notamment de la tourbe noire.

Une couche présentant les caractéristiques désirées peut être simplement obtenue par l'homme du métier comme décrit précédemment.

L'épaisseur de cette couche est avantageusement de 10 à 150 cm, de préférence de 15 à 100 cm et de manière particulièrement préférée de 20 à 50 centimètres.

Selon un mode de réalisation particulier du dispositif, la couche de support pour la végétation correspond à des sols ou des boues polluées à traiter.

L'épaisseur de cette couche est alors de 50 à 200 cm, de préférence de 50 à 150 cm et de manière particulièrement préférée de 50 à 100 cm.

Dans ce cas, la couche comprenant des matériaux soit organiques, tels que les tourbes noires ou les composts, soit alluvionnaires correspond à une couche intermédiaire entre la couche drainante et la couche servant de support pour la végétation.

Selon un autre mode de réalisation particulier du dispositif, la couche de support pour la végétation correspond à la couche comprenant des matériaux soit organiques, tels que les tourbes noires ou les composts, soit alluvionnaires.

Selon un deuxième mode de réalisation préféré du dispositif, la couche drainante du lit filtrant planté est reliée à un système d'aération. Ce système d'aération, qui peut prendre la forme d'évents, relié à la base du lit filtrant planté au moyen de gaines ou de canalisations permet d'améliorer l'efficacité des périodes d'assèchement, et par la même les réactions aérobies dans la totalité du lit filtrant planté.

Ledit système d'aération peut notamment être relié aux drains de récupération disposés dans la couche drainante.

Avantageusement, le lit filtrant planté opère une filtration de type verticale de la couche drainante vers la couche support ou l'inverse.

Selon un troisième mode de réalisation préféré du dispositif, ce dernier comprend en outre une alimentation en air pollué débouchant dans la couche drainante du lit filtrant planté. Ladite alimentation peut notamment prendre la forme d'une Ventilation Mécanique Contrôlée (VMC). Avantageusement, ladite alimentation est couplée à une vanne de sorte de pouvoir organiser des périodes aérobies ou anaérobies dans ledit lit filtrant planté.

Avantageusement encore, la couche drainante du massif filtrant est associée à un système d'aération. Ce système d'aération peut notamment prendre la forme d'évents localisés à la surface du lit filtrant planté, lesquels évents sont connectés à la couche drainante et/ou à des drains présents dans celle-ci par le biais de canalisation.

Le dispositif comprend en outre une alimentation des casiers végétalisés en produits acidifiants ou en acides naturels, de préférence totalement biodégradables.

Cette alimentation est couplée à l'alimentation des casiers végétalisés en eau, en eaux usées ou en boues.

Cette alimentation est couplée à une pompe doseuse, lesquelles sont bien connues de l'homme du métier, de sorte que la quantité de produits acidifiants ajoutée au lit filtrant planté est telle que la valeur de pH du lit filtrant planté, comprise avant leur addition dans un intervalle de 7 à 9 et de préférence de 7 à 8, soit abaissée dans l'intervalle de 4 à 7, de préférence de 5 à 7.

Avantageusement encore, les produits acidifiants utilisés et totalement biodégradables alimentant le lit filtrant planté sont choisis parmi les acides naturels, de préférence parmi les acides organiques, tels que l'acide citrique, oxalique ou malique, de préférence le produit acidifiant est l'acide citrique.

Le filtre de piégeage du dispositif selon l'invention permet la concentration des polluants évacués du lit filtrant planté lors de chaque cycle d'assèchement/irrigation et ainsi d'accélérer considérablement la vitesse de dépollution.

Le filtre de piégeage peut prendre la forme d'une enceinte comprenant des composants susceptibles d'immobiliser des polluants non-dégradables et notamment des métaux. À titre d'exemple de tels composants, on peut citer les scories phosphatées, la béringite et la grenaille d'acier.

Selon un cinquième mode de réalisation préféré du dispositif, le filtre de piégeage prend la forme d'un lit filtrant planté, lequel comprend alors une couche servant de support à la végétation composée essentiellement de matériaux organiques tels que décrit précédemment, de préférence de tourbe, de sorte de pouvoir fixer les polluants non-dégradables, et surtout les espèces métalliques présentes dans les lixiviats provenant du premier massif filtrant. Ledit lit filtrant planté peut également comprendre une couche drainante.

Selon un sixième mode de réalisation préféré du dispositif, celui-ci comprend en outre un moyen d'évacuation de l'eau présente dans le filtre de piégeage.

Avantageusement, ledit moyen d'évacuation prend la forme d'une canalisation qui, dans le cas d'un filtre de piégeage prenant la forme d'un lit filtrant planté, est relié à la couche drainante de ce dernier.

Avantageusement encore, ledit moyen d'évacuation est contrôlé par une vanne permettant la libération de l'eau présente dans le filtre de piégeage après le piégeage efficace des polluants non-dégradables, et notamment des espèces métalliques dans ce dernier.

Ledit moyen d'évacuation peut permettre la libération des effluents traités vers le milieu naturel.

Selon un mode de réalisation particulier du dispositif, des dispositifs selon l'invention sont placés en série dans une même installation. Le moyen d'évacuation relié au filtre de piégeage d'un premier dispositif correspond alors à l'alimentation d'un lit filtrant planté d'un second dispositif disposé en aval.

Selon un second mode de réalisation particulier du dispositif, celui-ci comprend en outre et en aval du filtre de piégeage une aire d'infiltration et d'évaporation, laquelle aire peut notamment être plantée de saules, d'aulnes, de peupliers et/ou de bouleaux, et reliée au filtre de piégeage par un moyen d'évacuation. Cette dernière aire permet de minimiser les rejets dans le milieu naturel.

Les dessins annexés illustrent l'invention :
La figure 1 représente une coupe de principe de l'ensemble du dispositif de traitement pour l'eau par phytolixiviation et phytofixation.
La figure 2 représente une coupe du premier type de lit filtrant planté (ou filtre végétalisé) de type vertical, une coupe du filtre horizontal et une vanne de régulation du niveau d'eau dans les deux types de filtres pour le traitement de l'eau.
La figure 3 représente une coupe du bassin de régulation hydraulique
La figure 4 représente l'aire d'infiltration et d'évapotranspiration sous forme de forêt humide artificielle.
La figure 5 représente une coupe du filtre de piégeage des polluants.
La figure 6 représente le plan masse général du dispositif de dépollution des sols ou boues urbaines par phytolixiviation et phytofixation.
La figure 7 représente une coupe du casier de traitement des matériaux pollués.
La figure 8 représente l'installation de différents végétaux pour favoriser la stimulation de la rhizosphère.
La figure 9 représente la coupe type d'un lit filtrant planté horizontal pour l'air.
La figure 10 représente la coupe détaillée d'un mur végétal filtrant.
La figure 11 donne un exemple d'un lit filtrant planté pour l'air vertical avec système interne d'irrigation.

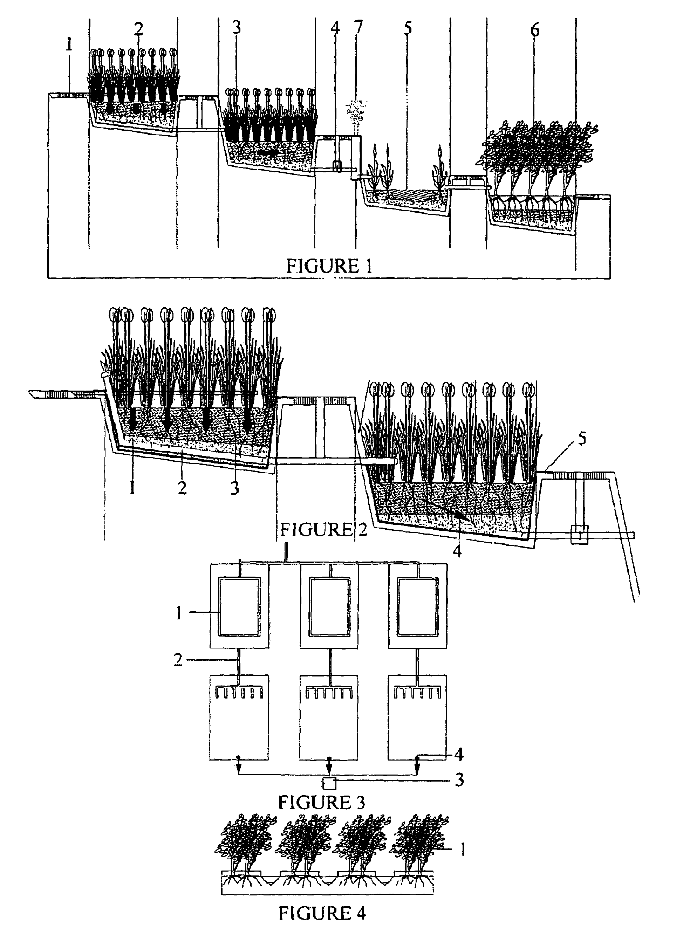

En référence à la figure 1, la coupe de l'ensemble du dispositif présente tout d'abord le principe de la circulation des effluents à traiter. L'arrivée des eaux d'alimentation se fait en tête de système. L'eau traverse une première série de filtres verticaux (2) composé d'une couche drainante en gravier et une couche de filtration (mélange de tourbe granulaire et de pouzzolane) plantée de roseaux, joncs et iris. L'eau s'écoule ensuite au niveau de la deuxième série de filtres horizontaux (3) ayant les deux mêmes types de couches de matériaux avant de déboucher à partir d'une vanne de régulation (4) sur le bassin de régulation hydrique (5). À la sortie du bassin prend place l'aire d'infiltration et d'évapotranspiration (6) planté de saules, aulnes, peupliers et bouleaux. Entre la sortie des lits filtrants plantés horizontaux et le bassin de régulation se trouve le filtre de piégeage (7) qui permet de piéger les éléments traces métalliques ou certains composés comme le phosphore par exemple.

La figure (2) représente une coupe des deux types de lits filtrants plantés (verticaux et horizontaux). Le lit filtrant planté des deux types de filtre vertical et horizontal est constitué de deux types de matériaux disposés en couches superposées. À la base des deux types de casier prend place la couche drainante (1) essentiellement composé par des galets, de gros gravier ou des blocs de matériaux lavés sur environ 25 centimètres. C'est dans cette couche que prend place les drains de récupération (2) des effluents traités. Les drains dans le filtre vertical sont reliés à des évents constituent également l'aération de ce filtre qui est aérobie. La seconde couche (3) de 30/50 cm est composée de matériaux filtrants comme de la tourbe granulaire, de la pouzzolane et du sable si nécessaire. Ces deux types de couches sont également utilisés pour le filtre horizontal (4) qui est horizontal du fait du sens de la circulation de l'eau. L'ensemble du casier est étanche avec un complexe d'étanchéité (5) composé de préférence avec une géo-membrane.

En référence à la figure 3, le plan masse du dispositif présente le système d'alimentation du filtre verticale (1). Il a la forme d'une boucle fermée pour permettre une parfaite répartition des effluents. Il est également démontable pour pouvoir être nettoyé. Les drains des filtres verticaux sont directement reliés aux filtres horizontaux (2). Les drains de récupération des effluents des filtres horizontaux sont directement reliés au filtre de piégeage (3). Chaque filtre horizontal dispose d'une vanne (4) pour fermer la circulation de l'eau et augmentée sa durée d'inondation à volonté. Les casiers horizontaux et verticaux, le bassin de régulation hydrique disposent d'un mélange de végétaux de milieux humides qui sont : les phragmites (Phragmites communis), les scirpes (Scirpus communis), les carex (Carex acutiformis), les iris (Iris speudaocorus).

La figure 3 présente la coupe de l'aire d'infiltration et d'évapotranspiration. Différents types d'arbustes de milieux humides sont utilisés (1). Il s'agit de saules (Salix viminalis), d'aulnes (Aulnus glutinosa), et de cerisiers sauvages (Prunus padus). Il s'agit d'un type de formation végétale des zones humides (type Alnio-padion) protégés par la convention de RAMSAR.

L'ensemble du dispositif est dimensionné en fonction des volumes des effluents liquides à traiter sur la base de 150 litres par équivalent habitant et d'une moyenne de 2 à 12 M² par équivalent habitant en moyenne en France. Ce dispositif s'applique aux eaux usées urbains, agricoles et industrielles.

La conception de ce lits filtrants plantés de traitement permet une parfaite gestion des facteurs du milieu artificiel recréé à savoir l'oxydoréduction et le Ph. L'oxydoréduction est contrôlée par le biais du lit filtrant planté qui dispose d'une bonne aération et par le biais du système d'alimentation des casiers qui permet la mise en charge total du casier planté et son arrosage de manière à organiser des périodes aérobies et anaérobies.

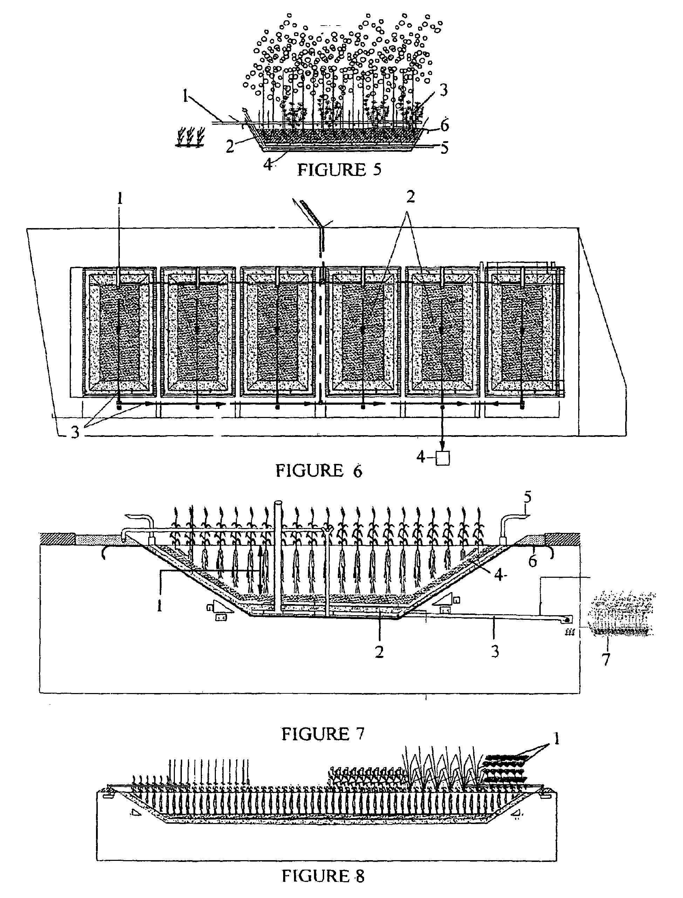

En référence à la figure 5, le filtre de piégeage des polluants (phosphates, micropolluants non biodégradables, éléments traces métalliques...) comporte un simple drain d'arrivée des lixiviats (1) une couche filtrante (2) composée de matériaux organiques favorisant là encore l'installation de végétaux de milieux humides (3) indispensables pour maintenir la perméabilité du milieu. Cette couche filtrante peut avoir entre 0,70 à 2 mètres de profondeur est un élément clé du filtre. Il est composé d'un mélange de matériaux granulaires, organiques et limoneux pour fixer les polluants et leur phase porteuse par adsorption et changement de forme chimique des polluants (formes minérales, formes métalliques non-biodisponibles...). Ces matériaux comportent également des fertilisants. À la base du filtre prend place une couche drainante (4) de blocs de galets sur 0,30. Dans cette dernière couche prend place le drain de sortie des lixiviats (5). C'est un milieu à la limite de l'anorexie. C'est un casier étanche avec un complexe d'étanchéité (6) fait d'une géo-membrane généralement.

En référence à la figure 6, le plan général du dispositif de traitement des sols pollués comporte un système d'alimentation des casiers végétalisés (1) soit pour acheminer des boues liquides, soit pour acheminer de l'eau d'arrosage. C'est dans ce système d'alimentation que sont incorporés les acides naturels. Les matériaux pollués quand il s'agit de sols pollués notamment, peuvent être mis en dépôt en une seule fois dans plusieurs casiers de traitement (2). Un réseau de drains souterrains (3) récupère les lixiviats issus des casiers et chargés des polluants remobilisés. Ces lixiviats sont acheminés jusqu'au filtre de piégeage (4) des polluants.

En référence à la figure 7, la coupe d'un casier de traitement fait ressortir l'épaisseur des matériaux (1) à traiter qui ne dépassera en aucun cas 1,2 mètre d'épaisseur. Le lit filtrant planté est constitué de deux types de matériaux disposés en couches superposées. À la base du casier prend place la couche drainante (2) essentiellement composé par des galets ou des blocs de matériaux lavés sur environ 20 à 30 centimètres. C'est dans cette couche que prend place les drains de récupération (3) des lixiviats qui constituent également la première aération. La seconde couche (4) de 20 à 30 cm est composée de matériaux filtrants granulaires de type pouzzolane tourbe granulaire ou organiques (tourbes noires, composts...). C'est dans cette dernière couche du massif filtrant que prend place le deuxième système aération (5) constituée de drains directement reliés aux évents agissant comme des petites cheminées d'aération. L'ensemble du casier est étanche avec un complexe d'étanchéité (6) composé de préférence avec une géo-membrane. Les eaux d'arrosages ou les lixiviats sont ensuite dirigées vers le filtre de piégeage (7).

En référence à la figure 8, du casier de traitement avec les végétaux (1), le dispositif s'appuie sur un mélange de végétaux de milieux humides qui sont : les phragmites (Phragmites communis), les scirpes (Scirpus communis), les carex (Carex acutiformis), les iris (Iris speudaocorus), les saules (Salix viminalis), les aulnes (Aulnus glutinosa), les cerisiers sauvages (Prunus padus) types de formations humides (type Alnio-padion) protégés par la convention de RAMSAR.

L'ensemble du dispositif est dimensionné en fonction des volumes de matériaux pollués à traiter. Ce dispositif peut s'appliquer aux boues urbaines, aux produits de curage, aux sols contaminés et pour tous les types polluants industriels (pétrolier, minier, sidérurgique, de transformation, papeteries...) ou agricole (lisier, eaux blanches, rejets vinicoles...).

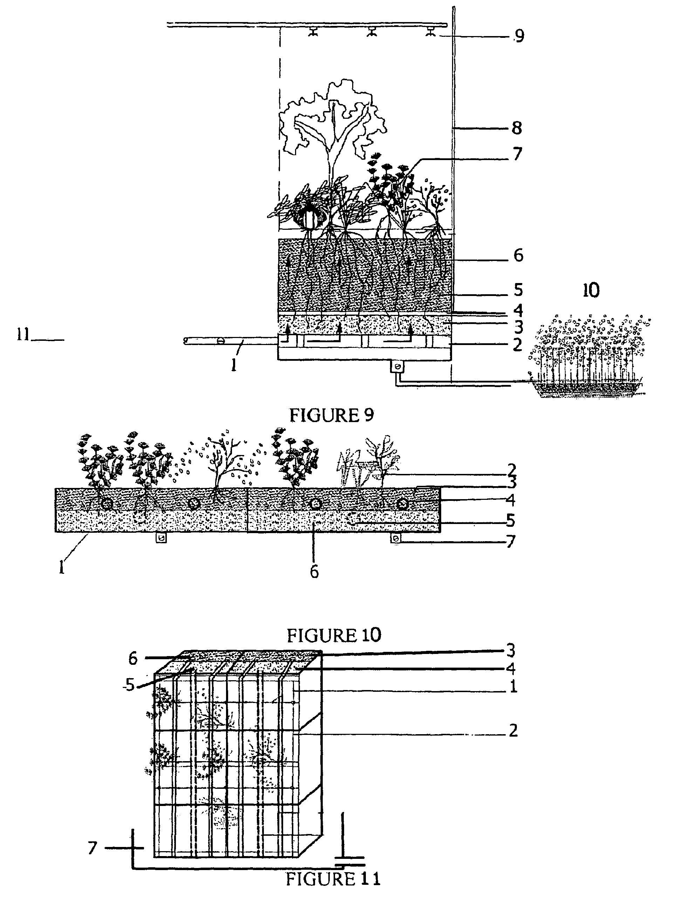

En référence à la figure 9, le lit filtrant planté pour le traitement de l'air comporte une arrivée d'air pollué (par la base qui permet de pulser l'air à travers le lit filtrant planté. Les gaz traversent un lit de caillebotis (2), une couche drainante (3) faite de galets ou de gravier puis une géo grille (4) avant d'atteindre la couche filtrante (5). L'air continue son ascension dans la masse filtrante en passant par un lit de matière organique fixatrice (6) et de pouzzolane type 5/20 (0m10). La pouzzolane agit comme un support pour l'implantation d'une flore bactérienne qui participer à la décomposition des gaz à effet de serre (N02, CO, ...) et les gaz viciés. Cette couche filtrante essentiellement organique est plantée superficiellement par des plantes fixatrices (7). La végétation peut être soit à l'air libre soit protégée par une partie vitrée (8) pour faire une serre. Dans tous les cas il est prévu un système d'arrosage fixé au toit (9), soit mis au pied des plantes. Au niveau de la base du filtre, un système de récupération des eaux est prévu pour traiter les lixiviats dans un filtre de piégeage (10).

En référence à la figure 10, la mise en place de petits casiers plantés permet de réaliser un système filtration de l'air pouvant être posé sur les toits d'immeubles ou sous forme de mur végétal vertical filtrant. Le casier (1) est constitué soit de petits bacs en PVC traité anti-corrosion, soit de petits casiers métalliques galvanisés ou inox. La végétation (2) est installée sur la couche filtrante (3). Un dispositif d'humidification intégré par le biais d'un réseau homogène de micro drains d'irrigation (4) est installé dans la couche filtrante qui est aussi le substrat de plantation. Les drains d'arrivée d'air (5) pollué est installé dans la couche drainante (6). Dans la base du casier ou du bac PVC, une récupération des eaux de lessivages est prévue pour traiter ces eaux dans un filtre de piégeage si nécessaire.

En référence à la figure 11, l'installation présente un mur végétal filtrant vertical autoporteur grâce à un système de gabions rigides soudés (1). À l'intérieur des gabions, la couche drainante et filtrante est tenue par deux toiles (2) fixées sur le grillage des gabions par des simples attaches. La toile retenant la couche filtrante (3) est un simple feutre de plantation et la toile retenant la couche drainante (4) est une bâche plastique imperméable traitée anticorrosion. Les drains d'arrivée d'air pollué (5) sont dans la couche drainante et les drains d'irrigation (6) dans la couche filtrante. En bas du mur est prévu un bac (7) de récupération des eaux.

D'autres avantages et caractéristiques de l'invention apparaîtront des exemples qui suivent concernant la préparation de microsphères sèches contenant du parfum et de poudres compactées contenant de telles microsphères.

### Exemple 1 : installation de traitement de sols pollués :

### 1) Principe :

Le fonctionnement d'un Jardin Filtrant est basé sur le principe de la phytoremédiation *ex situ* dans les casiers végétalisés à travers deux étapes du traitement successives.

### Première étape : Phytostimulation/Rhizofiltration

- Principes de fonctionnement au niveau du casier :
   - irrigation alternée,
   - écoulement vertical à mouvement descendant,
   - conditions aérobies.
- Fonctions principales :
   - La filtration des sols par le lit filtrant planté couplée à la rhizofiltration/rhizodégradation par le tissu racinaire des végétaux (en particuliers des plantes macrophytes).
   - La biodégradation/minéralisation de la matière organique par les microorganismes associés aux plantes.

Les casiers de la première étape sont soumis à une irrigation cyclique alternée. L'alternance des périodes d'hydromorphie et d'assèchement permet de moduler les conditions d'oxydo-réduction et de contrôler les réactions aérobies/anaérobies. La période d'assèchement suffisamment long permet la réoxygénation des casiers afin de contrôler les réactions aérobies, renforcée avec une aération artificielle par un système des cheminées.

### Seconde étape : Phytofixation/Phytoextraction

- Principes de fonctionnement au niveau du casier :
   - écoulement vertical à mouvement ascendant,
   - conditions anaérobies/aérobies,
   - alimentation continue.
- Fonctions principales :
   - Le piégeage des éléments métalliques sur le massif fixant (lit de tourbe) couplé à la phytoséquestration par des plantes.
   - L'évapotranspiration des eaux de drainage.

### 2) Organisation du dispositif :

Le dispositif se compose de cinq casiers expérimentaux. Tous les casiers sont creusés dans le sol et isolés du reste du sol par un complexe d'étanchéité. Les casiers A, B, C et D sont disposés en terrasse par rapport au casier E, permettant d'utiliser la gravité pour le transfert des eaux de drainage dans le casier E.

Les quatre casiers de la première étape de traitement (A, B, C et D) contiennent des sols pollués à raison de 3 t par casier. Le casier central E assure en permanence la collecte des eaux de drainage sur un lit de tourbe.

Les principales caractéristiques du dispositif étaient les suivantes :

| | |
|---|---|
| Nombre de casiers expérimentaux | 5 |
| Profondeur des casiers | 1 m |
| Surface utile du casier (4x4 m au fond) | 4 x 4 m |
| Volume disponible du casier | 6 m³ |
| Emprise au sol des 5 casiers | 80 m² |
| Sols pollués traités | 15 t |

### 3) Protocole:

Les quatre casiers de traitements ont été soumis à une irrigation cyclique alternée qui consiste à une série d'arrosages durant 5 jours, avec un apport en eau de 1600 litres par casier, effectué durant la semaine d'irrigation, suivie d'une période d'assèchement (de 1 semaine pour le casier B et de 3 semaines pour les casiers A, C et D). L'apport de l'eau d'arrosage se fait grâce à une cuve à volume constant qui permet de s'affranchir des variations quotidiennes. De l'acide citrique est ajouté aux casiers A, B et C de sorte que la valeur de pH dans ces casiers soit compris entre 5 et 7 durant les périodes d'irrigation

Le sol dans les casiers est déshydraté pendant la période d'assèchement grâce au système de drainage (lit filtrant planté avec drains) aux fonds de casiers. Les eaux de drainage issus de quatre casiers (chargés en fractions solubles sous forme dissoute ainsi qu'en fractions fines en suspension) sont récupérés par un système de drains perforés au fond de casier et envoyés, grâce à l'écoulement gravitaire, dans le casier E.

### 4) Résultats:

Les résultats ont montré que les sols des différents bacs ayant subi un traitement acide et conjointement des cycles d'irrigation/assèchement présente une concentration en polluants, parmi lesquels les métaux, très fortement réduite. En l'absence de traitement acide, une même baisse de la concentration en polluants est observée, mais d'un facteur moindre.

L'analyse du sol du casier E correspondant au filtre de piégeage a montré que la pollution s'est concentrée dans la couche de tourbe de celui-ci.

### Exemple 2 : installation de traitement d'eaux polluées :

### 1) Dispositif

Un dispositif similaire a été mis en oeuvre avec un premier lit filtrant planté de roseaux vertical et muni d'évents reliés à sa couche drainante composée de galets, lequel massif filtrant est alimenté par des eaux usées prétraitées par dégrillage. L'alimentation est couplée à une vanne de sorte de réguler les périodes d'arrosage et d'assèchement. L'arrosage s'opère à raison de 4 heures par jour suivi d'une période d'assèchement de 18 heures. L'alimentation est en outre couplée à une pompe doseuse contenant de l'acide citrique et permettant d'obtenir une valeur de pH comprise entre 5 et 7 au cours des périodes d'arrosage dans le massif filtrant.

Une canalisation relie la couche drainante du lit filtrant planté à un filtre de piégeage. Ladite canalisation est munie d'une vanne permettant d'empêcher le passage des liquides du lit filtrant planté vers le filtre de piégeage lors de l'alimentation du massif filtrant.

Le filtre de piégeage correspond à un lit filtrant planté composé d'une couche drainante et d'une couche de support pour la végétation à base de tourbe, laquelle est plantée de phragmites et de tourbe.

Enfin, le filtre de piégeage est relié par une canalisation, elle aussi munie d'une vanne qui permet de maintenir ce dernier en environnement anaérobie, à une aire d'évaporation et d'infiltration des eaux traitées résiduelles plantées de saules, de frênes et d'aulnes.

### 2) Résultats

Les résultats obtenus avec le dispositif décrit précédemment sont les suivants :

| Composants | Flux entrants | Sortie des jardins filtrants |
|---|---|---|
| Matière en suspension | 11 500 | 11 |
| (MES ; mg/l) | | |
| DCO (mg/l) | 11 200 | 41 |
| Demande biologique en Oxygène (DBO ; mg/l) | 8 700 | 53 |
| Hydrocarbures dissous | 51 | 0,2 |
| HAP (mg/l) | 0,1 | 0,002 |
| NTK (mg/l) | 2,1 | 1,4 |
| Pt (mg/l) | 1,7 | 0,9 |
| Cuivre | 360 | 5 |
| Plomb | 211 | 31 |

Les résultats montrent que le dispositif selon l'invention permet d'obtenir une forte dépollution des eaux usées entrant dans le jardin filtrant, laquelle dépollution est efficace pour tous les polluants testés.

## Revendications

1. Procédé de dépollution par phytoremédiation destiné au traitement d'eaux usées, d'air ou de sols pollués comprenant :
- une première étape d'introduction de polluants sous forme solide, liquide ou gazeuse dans un lit filtrant planté, de sorte d'organiser des périodes aérobies et anaébies, une étape d'arrosage permettant une saturation du massif ou lit filtrant planté en eau lors de la période anaérobie, l'organisation des périodes cycliques d'arrosage correspondant à une succession irrigation/assèchement du lit filtrant planté étant **caractérisé en ce que** la répartition des périodes irrigation/assèchement correspond à un rapport de 2/1 à 1/50, et
- une étape d'addition de produits acidifiants ou d'acides naturels au lit filtrant planté au cours des périodes d'arrosage dans laquelle la quantité de produits acidifiants ajoutée au lit filtrant planté est telle que la valeur de pH du lit filtrant planté soit abaissée dans l'intervalle de 4 à 7.

2. Procédé selon la revendication 1 dans lequel la répartition des périodes irrigation/assèchement correspond à un rapport de 1/1 à 1/20.

3. Procédé selon l'une quelconque des revendications précédentes, dans lequel le lit filtrant planté opère une filtration de type verticale.

4. Procédé selon l'une quelconque des revendications précédentes, dans lequel la couche drainante du lit filtrant planté est associée à un système d'aération.

5. Procédé selon l'une quelconque des revendications précédentes, dans lequel le lit filtrant planté comprend une couche, autre que la couche drainante, présentant les caractéristiques physiques de matériaux alluvionnaires avec une forte porosité comprise dans l'intervalle 20 à 60% et une conductivité hydraulique dans l'intervalle de 100 à 1000 (m/d), laquelle couche est également riche en matériaux organiques.

6. Procédé selon l'une quelconque des revendication precédentes les dans lequel les produits acidifiants utilisés sont choisis parmi les acides naturels, de préférence parmi les acides organiques, tels que l'acide citrique, oxalique ou malique.

7. Procédé selon l'une quelconque des revendications précédentes, dans lequel il comprend en outre une étape d'évacuation des lixiviats de la couche drainante du lit filtrant planté vers un filtre de piégeage.

## Claims

1. Method of depollution by phytoremediation intended for treating wastewater, polluted air or soil comprising:
- a first step of introducing the pollutants in solid, liquid or gaseous form in a planted filter bed, so as to define aerobic and anaerobic periods, a step of irrigation allowing saturation of the grouping or planted filter bed with water during the anaerobic period, the organisation of the cyclic irrigation period corresponds to a succession of irrigation/drying correspond to a ratio of 2/1 to 1/50, and
- a step of adding acidifying products or natural acids to the planted filter bed during the irrigation periods wherein the amount of acidifying products added to the planted filter bed is such that the pH value of the planted filter is reduced in the range of 4 to 7.

2. Method according to claim 1, wherein the succession of irrigation/drying correspond to a ratio of 1/1 to 1/20.

3. Method according to any one of the preceding claims, wherein the planted filter bed uses a vertical-type filtration system.

4. Method according to any one of the preceding claims, wherein the draining layer of the planted filter bed is associated with an aeration system.

5. Method according to any one of the preceding claims, wherein the planted filter bed comprises a layer, other than the draining layer, having the physical characteristics of alluvial material with high porosity comprised in the range of 20 to 60% and hydraulic conductivity in the range of 100 to 1000 (m/d), said layer being also rich in organic matter.

6. Method according to any one of the preceding claims wherein the acidifying products used are chosen from among natural acids, preferably from among organic acids, such as citric, oxalic or malic acid.

7. Method according to any one of the preceding claims, wherein it also comprises a step of evacuating the leachates from the draining layer of the planted filter bed to a trapping filter.

## Patentansprüche

1. Sanierungsverfahren durch Phytosanierung zur Behandlung von Abwasser, kontaminierter Luft oder Böden, wozu folgende Schritte gehören:
- ein erster Schritt zur Einführung der Schadstoffe in fester, flüssiger oder gasförmiger Form in ein bepflanztes Filterbett in der Weise, dass aerobe und anaerobe Perioden geschaffen werden, ein Bewässerungsschritt, der eine Sättigung mit Wasser des bepflanzten Filterbetts oder Massivs während der anaeroben Periode ermöglicht, wobei die Organisation der zyklischen Bewässerungsperioden, die einem Wechsel von Bewässerung/Austrocknen des bepflanzten Filterbetts entspricht, **dadurch gekennzeichnet ist, dass** die Verteilung der Bewässerungs-/Austrocknungsperioden in einem Verhältnis von 2:1 bis 1:50 steht und
- ein Schritt in dem Säuerungsmittels oder natürliche Säuren während der Bewässerungsphasen in das bepflanzte Filterbett zugegeben werden, wobei die Menge der in das bepflanzte Filterbett zugegebenen Säuerungsmittel derart ist, dass der pH-Wert des bepflanzten Filterbetts auf Werte zwischen 4 und 7 reduziert wird.

2. Verfahren entsprechend Anspruch 1, wobei die Verteilung der Bewässerungs-/Austrocknungsperioden in einem Verhältnis von 1:1 bis 1:20 steht.

3. Verfahren entsprechend einem beliebigen der vorhergehenden Ansprüche, **dadurch gekennzeichnet, dass** das bepflanzte Filterbett eine vertikale Filterung verwendet.

4. Verfahren entsprechend einem beliebigen der vorhergehenden Ansprüche, wobei die Drainageschicht des bepflanzten Filterbetts mit einem Belüftungssystem assoziiert ist.

5. Verfahren entsprechend einem beliebigen der vorhergehenden Ansprüche, wobei das bepflanzte Filterbett außer der Drainageschicht eine weitere Schicht enthält, die die physischen Eigenschaften von Alluvionen mit hoher Porosität im Bereich von 20 bis 60 % und ein hydraulisches Leitungsvermögen im Bereich von 100 bis 1000 (m/d)aufweist, wobei besagte Schicht auch reich an organischen Stoffen ist.

6. Verfahren entsprechend einem beliebigen der vorhergehenden Ansprüche, wobei die verwendeten Säuerungsmittel unter natürlichen Säuren, vorzugsweise unter organischen Säuren, wie Zitronen-, Oxal- oder Apfelsäure ausgewählt werden.

7. Verfahren entsprechend einem beliebigen der vorhergehenden Ansprüche, **dadurch gekennzeichnet, dass** zu diesem Verfahren auch ein Schritt zur Ableitung des Sickerwassers aus der Drainageschicht des bepflanzten Filterbetts in einen Fangfilter gehört.
